# EUROPÄISCHE PATENTSCHRIFT

(11) **EP 2 598 004 B1**
(45) Veröffentlichungstag und Bekanntmachung des Hinweises auf die Patenterteilung: **15.06.2016**
(21) Anmeldenummer: 11738204.4
(22) Anmeldetag: 25.07.2011
(51) Int. Cl.: A47J 43/07

(54) **WERKZEUGSATZ MIT EINEM WERKZEUGADAPTER FÜR EIN KÜCHENANTRIEBSGERÄT**
TOOL SET HAVING A TOOL ADAPTER FOR A KITCHEN DRIVE APLIANCE
JEU D'OUTILS AVEC UN ADAPTATEUR D'OUTIL POUR UN APPAREIL D'ENTRAÎNEMENT CULINAIRE

(30) Priorität: 28.07.2010 DE 102010038579
(43) Veröffentlichungstag der Anmeldung: 05.06.2013
(73) Patentinhaber: BSH Hausgeräte GmbH, 81739 München (DE)
(72) Erfinder: RUDEZ, Darko, 3230 Sentjur (SI); PESEC, Jurij, 3301 Petrovce (SI)
(86) Internationale Anmeldenummer: PCT/EP2011/062724
(87) Internationale Veröffentlichungsnummer: WO 2012/013626

(56) Entgegenhaltungen:
- EP-A1- 1 223 842
- US-A- 4 733 827

## Beschreibung

### Gebiet der Erfindung

Die vorliegende Erfindung betrifft einen Werkzeugsatz für ein Küchenantriebsgerät zum Antreiben eines Werkzeugs. Sie betrifft außerdem einen Küchengerätesatz mit dem Werkzeugsatz.

### Hintergrund der Erfindung

Zur Verarbeitung von Lebensmitteln in der Küche sind aus dem Stand der Technik zahlreiche motorbetriebene Antriebsgeräte bekannt, die einen Motor enthalten und die auswechselbare Werkzeuge antreiben können. Bei den Antriebsgeräten unterscheidet man grundsätzlich zwischen Standgeräten und Handgeräten. Zu den Standgeräten gehören zum Beispiel Geräte vom Typ des Standmixers und Geräte vom Typ der Universalküchenmaschine. Bei den Handgeräten unterscheidet man unter anderem zwischen Geräten vom Typ des Handrührers (manchmal auch als Küchenmixer bezeichnet) und Geräten vom Typ des Stabmixers (manchmal auch als Pürierstab bezeichnet).

Typische Werkzeuge sind Dreharbeitswerkzeuge, z.B. rotierende Schneidmesser, Püriermesser, Passiervorrichtungen, Gemüsehobel und Raspelscheiben. Um diese Werkzeuge einfach verstauen zu können, werden die Küchenantriebsgeräte nicht selten mit einer Ablage, z.B. in Form einer Schublade, ausgestattet, in der die Werkzeuge abgelegt werden können. Zum Beispiel offenbart das Patent EP 1 223 842 B1 einen Lagerungsträger für Zubehörteile eines Elektrohaushaltsgeräts zur Nahrungsmittelbereitung, der zur Aufnahme von Werkzeugen unterschiedlicher Art in mehrere Zonen eingeteilt sind, die durch Rippen und Buckel voneinander abgegrenzt sind. Der Lagerungsträger hat die Form einer Schublade in dem Elektrohaushaltsgerät.

Die Patentschrift US 4 733 827 offenbart einen Vorratsbehälter für Dreharbeitswerkzeuge und Zubehör eines Elektrohaushaltsgeräts. Der Vorratsbehälter hat Platz zur Lagerung eines Rotiermessers und eines Knetmessers sowie eines Werkzeugadapters. Die Werkzeuge werden in zwei getrennten V-förmigen Ablagen platziert und der Adapter in einer Aushöhlung. Der Behälter weist eine geneigte Ablagefläche und eine transparente Haube mit einem Schließmechanismus auf.

### Der Ereindung zugrundeliegende Aufgabe

Um ein Werkzeug an dem Küchenantriebsgerät zur Bearbeitung eines Lebensmittels zu installieren, muss der Fachmann das Werkzeug an dessen Lagerort, z.B. einer Werkzeugablage, aufgreifen und sodann an einer Kupplungseinrichtung des Küchenantriebsgeräts ankuppeln. Zum Ankuppeln an das Küchenantriebsgerät ist gewöhnlich jedes Werkzeug mit einer Kupplung ausgestattet. Diese Kupplung beansprucht bei der Lagerung des Werkzeugs Platz, was zur Folge hat, dass in einem bestimmten Volumen eine Werkzeugablage nur eine begrenzte Anzahl von Werkzeugen untergebracht werden kann. Hinzu kommt, dass der Benutzer bei der Montage des Werkzeugs durch unsachgemäße Handhabung einem Verletzungsrisiko ausgesetzt ist, insbesondere, wenn das Werkzeug ein Messer aufweist. Es ist eine Aufgabe der vorliegenden Erfindung, den Platzbedarf von Werkzeugen bei der Aufbewahrung zu reduzieren. Eine andere Aufgabe der Erfindung liegt darin, das Verletzungsrisiko bei der Montage der Werkzeuge zu senken.

### Eriindungsgemäße Lösung

Zur Lösung der Aufgabe lehrt die vorliegende Erfindung einen Werkzeugsatz für ein Küchenantriebsgerät zum Antreiben eines Werkzeugs, wie in Anspruch 1 definiert, wobei der Werkzeugsatz umfasst:
mindestens einen Werkzeugadapter, der an das Küchenantriebsgerät ankuppelbar ist, um von dem Küchenantriebsgerät angetrieben zu werden, mindestens ein Werkzeug, das an den Werkzeugadapter lösbar ankuppelbar ist, um vermittels des Werkzeugadapters von dem Küchenantriebsgerät angetrieben zu werden, und eine Werkzeugablage, die zumindest das Werkzeug aufnehmen kann. In der Werkzeugablage sind Haltemittel vorgesehen, die das Werkzeug in einer vorgesehenen Lage halten können, sodass ein Benutzer den Werkzeugadapter, wenn sich das Werkzeug in der Werkzeugablage befindet, an das Werkzeug ankuppeln kann. Weiter lehrt die Erfindung einen Küchengerätesatz, der einen solchen Werkzeugsatz und ein Küchenantriebsgerät umfasst.

Durch die Erfindung ist es vorteilhaft möglich, den Werkzeugadapter, und damit die Kupplung zum ankuppeln des Werkzeugst an das Küchenantriebsgerät, und das Werkzeug getrennt voneinander aufzubewahren und so Stauraum besser zu nutzen. Insbesondere genügt es, bei mehreren Werkzeugen nur einen Adapter vorzuhalten, was zu erheblichen Platzeinsparungen führen kann. Eine Rolle kann dabei spielen, dass die meisten Werkzeuge im Wesentlichen flach, z.B. scheibenförmig, ausgebildet sind, während die Kupplung sich im Allgemeinen über eine nicht unwesentliche Distanz senkrecht zur Fläche der Werkzeugscheibe erstreckt, z.B. weil sie zum Ankuppeln an das Küchenantriebsgerät über eine Welle dieses Geräts gestülpt werden muss. Die Folge kann eine zum Verstauen ungünstige weil im Querschnitt T-förmige Werkzeugform sein. Durch die erfindungsgemäße Trennung von Werkzeug und die Kupplung enthaltendem Adapter kann diesem Problem begegnet werden. Die Erfindung kann vorteilhaft z.B. mit Antriebsgeräten und mittels eines Standgeräts, beispielsweise einer Küchenmaschine, oder vom Typ eines Handgeräts, z.B. eines Handrührers oder eines Stabmixers, eingesetzt werden. Diese Geräte sind typischerweise mit einem Motor, vorzugsweise einem Elektromotor, als Antriebsmittel ausgestattet, um das an das Küchenantriebsgerät angekuppelte Werkzeug in Bewegung, gewöhnlich Rotation, zu versetzen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche. Die Bezugszeichen in sämtlichen Ansprüchen haben keine einschränkende Wirkung, sondern sollen lediglich die Lesbarkeit der vorliegenden Anmeldung verbessern.

Der bevorzugte Werkzeugadapter weist einen Griffbereich auf. An dem Griffbereich kann der Benutzer den Werkzeugadapter angreifen, um den Werkzeugadapter oder das System aus Werkzeugadapter mit angekuppeltem Werkzeug zu manipulieren. Insbesondere kann der Fachmann den Griffbereich nutzen, um das System aus Werkzeugadapter mit angekuppeltem Werkzeug an die Küchenantriebsmaschine anzukuppeln, um es durch diese anzutreiben. Er kann den Griffbereich vorzugsweise auch nutzen, um den Werkzeugadapter an das Werkzeug anzukuppeln oder von diesem zu trennen. Dazu sind Werkzeugadapter und Werkzeug vorzugsweise so gestaltet, dass es zum Ankuppeln des Werkzeugs an den Werkzeugadapter nicht erforderlich ist, das Werkzeug anzugreifen. In einer bevorzugten Ausführung der Erfindung sind zu diesem Zweck sämtliche eventuell zum Ankuppeln des Werkzeugs an den Werkzeugadapter vorhandenen Bedienmittel, z.B. Bedienteile von Sicherungsmitteln, nicht am Werkzeug sondern ausschließlich am Werkzeugadapter vorgesehen. So kann der Werkzeugadapter eine Handhabe aufweisen, welche von einem Benutzbar betätigbar ist, um die Werkzuge anzukuppeln. Der Werkzeugadapter ist weiterhin mit einer Schnittstelle versehen, welche eingerichtet ist, um mit einem Antrieb des Küchengeräts zusammenzuwirken.

Der Werkzeugsatz umfasst eine Werkzeugablage, die zumindest eines der Werkzeuge, vorzugsweise alle Werkzeuge des Werkzeugsatzes aufnehmen kann. Die bevorzugte Werkzeugablage kann auch den Werkzeugadapter aufnehmen. Besonders vorzugsweise hat die Werkzeugablage die Form eines Fachs, z.B. einer Schublade, die in dem Küchenantriebsgerät versenkbar ist. Dadurch hat der Benutzer die Werkzeuge und Werkzeugadapter immer zur Hand, wenn er das Küchenantriebsgerät in Betrieb nehmen möchte. Nach der Benutzung und der Reinigung der Werkzeuge kann er diese bequem wieder in der Schublade verstauen.

In der Werkzeugablage sind Haltemittel vorgesehen, die die Werkzeuge in einer vorgesehenen Lage halten können. Geeignete Haltemittel sind z.B. Auskragungen, Rippen, Mulden und Buckel. Beispiele für geeignete Haltemittel findet der Fachmann z.B. in der vorgenannten Patentschrift EP 1 223 842 B1 deren diesbezüglicher Inhalt durch Verweis Teil der vorliegenden Offenbarung ist. Die Haltemittel können vorteilhafterweise dazu beitragen, dass der Benutzer den Werkzeugadapter, wenn sich das Werkzeug in der Werkzeugablage befindet, an das Werkzeug ankuppeln kann, ohne das Werkzeug in die Hand nehmen zu müssen, da das Werkzeug von den Haltemitteln gehalten wird. Mit anderen Worten, die Haltemittel verhindern, dass das Werkzeug ausweicht, wenn der Fachmann den Werkzeugadapter an das Werkzeug anbringt.

Vorzugsweise sind Kupplungsmittel zum lösbaren Ankuppeln des Werkzeugs oder der Werkzeuge an den Werkzeugadapter auf einer Außenseite des jeweiligen Werkzeugs angeordnet. Besonders vorzugsweise befinden sich sämtliche Kupplungsmittel des Werkzeugs zum Ankuppeln an den Werkzeugadapter auf der Außenseite des Werkzeugs. Dadurch wird die Reinigung der Kupplungsmittel und damit die Reinigung des Werkzeugs wesentlich vereinfacht. Die Kupplungsmittel können z.B. ein Gewinde umfassen, das auf der Außenseite einer ringförmigen Auskragung um das Zentrum des Werkzeugs angebracht ist. Darüber hinaus können sie Rastmittel umfassen, die z.B. ebenfalls auf der Außenseite dieser Auskragung angeordnet sein können. Das Gewinde und die Rastmittel können zum Ankuppeln an korrespondierendes Gewinde und korrespondierenden Rastmitteln des Werkzeugadapters zusammenwirken.

Der bevorzugte Werkzeugsatz weist Sicherungsmittel auf, um einem unbeabsichtigten Lösen des Werkzeugs von dem Werkzeugadapter vorzubeugen. Bei einem auf das Werkzeug aufschraubbaren Adapter können bevorzugte Sicherungsmittel im gesicherten Zustand ein gegenseitiges Verdrehen des Werkzeugs und des Werkzeugadapters um die Gewindeachse des Schraubgewindes und damit ein Lösen der Schraubverbindung verhindern. Besonders vorzugsweise handelt es sich bei den Sicherungsmitteln um Rastmittel, z.B. den vorgenannten. Bedienmittel zum Bedienen der Sicherungsmittel sind vorzugsweise an dem Werkzeugadapter, besonders vorzugsweise ausschließlich an dem Werkzeugadapter, angeordnet. Beispielsweise kann es sich bei den Sicherungsmitteln um eine oder mehrere an dem Werkzeugadapter angeordnete Rastlaschen oder eine Rastwippen handeln, die mit korrespondierenden Rastzähnen oder Rastkanten, z.B. in Form von Hinterschneidungen, am Werkzeug zusammenwirken. Zum Lösen der Sicherungsmittel muss ein Teil der Sicherungsmittel, z.B. die Rastlaschen oder eine Rastrippen, gegen eine Federkraft, z.B. ihre eigene elastische Federkraft oder die elastischer Rückstellmittel wie etwa einer Feder, ausgelenkt werden.

In einer bevorzugten Ausführung umfasst der erfindungsgemäße Werkzeugsatz mehrere Werkzeuge, wobei jedes Werkzeug an den Werkzeugadapter lösbar ankuppelbar ist, um vermittels des Werkzeugadapters von dem Küchengerät angetrieben zu werden. Vorzugsweise handelt es sich um unterschiedliche Werkzeuge, besonders vorzugsweise um Werkzeuge für unterschiedliche Aufgaben. Dies erlaubt es dem Anwender, aus mehreren Werkzeugen das für die anstehende Aufgabe am besten geeignete auszuwählen. Bei mehreren Werkzeugen lässt sich mit der Erfindung eine besonders große Platzersparnis erreichen, da für alle Werkzeuge nur ein einziger Adapter erforderlich ist.

Vorzugsweise umfasst mindestens ein Werkzeug ein Messer. Beispielsweise kann es sich um ein Schneidmesser, ein Püriermesser, ein Passiermesser, einen Gemüsehobel oder eine Raspelscheibe handeln. Bei solchen Werkzeugen kommen die Sicherheitsvorteile der Erfindung besonders zum Tragen, denn bei Messern besteht für den Benutzer bei der Handhabung eine erhöhte Verletzungsgefahr.

Es ist grundsätzlich nicht erforderlich, dass die Kupplungsmittel der Werkzeuge untereinander identisch sind, solange sichergestellt ist, dass jedes Werkzeug mit seinen Kupplungsmitteln an den Werkzeugadapter ankuppelbar ist. In einer bevorzugten Ausführung der Erfindung sind die Kupplungsmittel der Werkzeuge jedoch untereinander identisch. Das kann sowohl die Konstruktion und Produktion der Werkzeuge als auch deren Handhabung beim Ankuppeln an den Werkzeugadapter vereinfachen. Ferner kann somit die Kompatibilität einzelner Werkzeuge mit dem Werkzeugadapter sichergestellt werden.

Das bevorzugte Küchenantriebsgerät umfasst eine Kupplungseinrichtung, an die der Werkzeugadapter mit seiner Kupplung ankuppelbar ist. Die Kupplungseinrichtung des Küchenantirebsgeräts kann z.B. eine Welle (oder ein Wellenabschnitt) oder eine Buchse (oder ein Buchsenabschnitt) des Küchenantriebsgeräts sein, die zum Antrieb in Bewegung gesetzt werden kann. Die Bewegung ist vorzugsweise eine Drehbewegung. Entsprechend ist die Bewegung des Werkzeugadapters im Betrieb ebenfalls eine Drehbewegung und die Bewegung des Werkzeugs gleichfalls. Die Kupplungseinrichtung des Küchenantriebsgeräts und die Kupplung des Werkzeugadapters sind vorzugsweise so ausgebildet, dass sie bei an die Kupplungseinrichtung angekuppeltem Werkzeugadapter drehfest miteinander verbunden sind. Gleichfalls sind die Kupplungsmittel des Werkzeugs und der Werkzeugadapter so ausgebildet, dass diese beiden Teile bei an dem Werkzeugadapter angekuppeltem Werkzeug drehfest miteinander verbunden sind.

Ein bevorzugter Küchengerätesatz umfasst mindestens zwei verschiedene Küchenantriebsgeräte, an die der Werkzeugadapter ankuppelbar ist, um von dem Küchenantriebsgerät angetrieben zu werden. Beispielsweise kann es sich um eine Standküchenmaschine und um einen Handmixer handeln. Diese Ausführung der Erfindung hat den Vorteil, dass der Benutzer den gleichen Werkzeugsatz für verschiedene Küchenantriebsgeräte einsetzen kann. Hierdurch lässt sich ebenfalls eine Platzersparnis erzielen.

### Kurzbeschreibung der Zeichnungen

Weitere vorteilhafte Ausgestaltungen werden an Hand der nachfolgenden Zeichnungen mit Hilfe von Ausführungsbeispielen näher beschrieben, wobei die Erfindung jedoch nicht auf diese Ausführungsbeispiele beschränkt ist.

Es zeigen schematisch:
- Fig. 1: in perspektivischer Darstellung ein in einer Werkzeugablage abgelegtes Schneidwerkzeug und einen Werkzeugadapter, der nicht an das Schneidwerkzeug angekuppelt ist;
- Fig. 2: in perspektivischer Darstellung das in der Werkzeugablage abgelegte Schneidwerkzeug mit angekuppeltem Werkzeugadapter;
- Fig. 3: in perspektivischer Darstellung das aus der Werkzeugablage entnommene und an den Werkzeugadapter angekuppelte Schneidwerkzeug;
- Fig. 4: in perspektivischer Darstellung das in der Werkzeugablage abgelegte und von dem Werkzeugadapter getrennte Schneidwerkzeug;
- Fig. 5: in perspektivischer Schnittdarstellung der Werkzeugadapter mit angekuppeltem Werkzeug im Bereich der Kupplungsmittel;
- Fig. 6: in Draufsicht von oben die Werkzeugzeugablage mit eingelegtem Schneidwerkzeug und an das Werkzeug angekuppeltem Werkzeugadapter;
- Fig. 7: den Werkzeugadapter mit angebrachtem Werkzeug in Querschnittsansicht durch die Ebene C-C in Fig. 8; und
- Fig. 8: den in der Werkzeugablage sitzenden Werkzeugadapter mit angebrachtem Werkzeug in Querschnittsansicht durch die Ebene B-B in Fig. 6.

### Ausführliche Beschreibung der Erfindung anhand eines Ausführungsbeispiels

Bei der nachfolgenden Beschreibung einer bevorzugten Ausführungsform der Erfindung bezeichnen gleiche Bezugszeichen gleiche oder vergleichbare Komponenten.

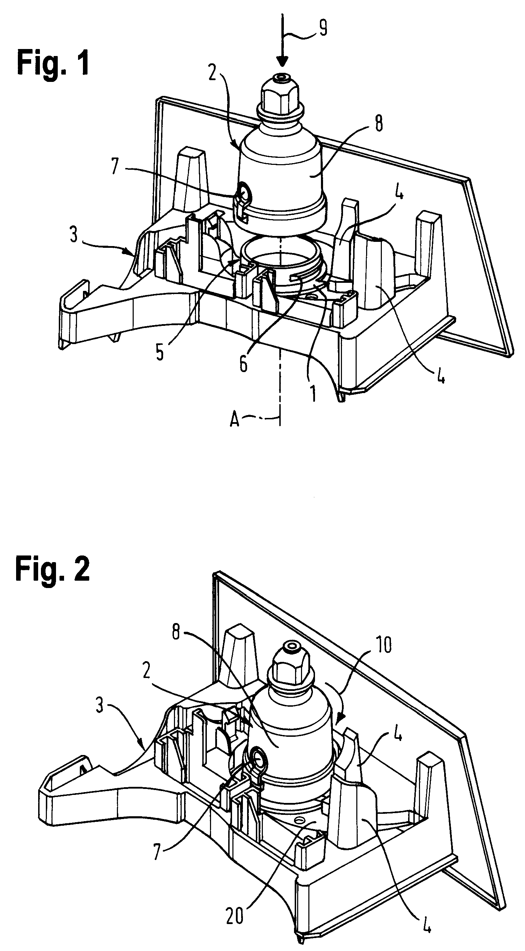

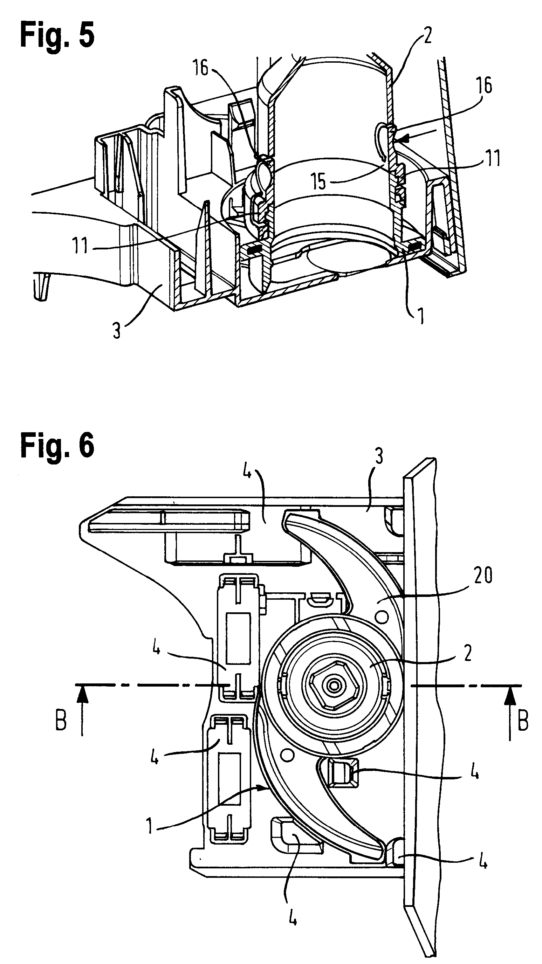

Ein erfindungsgemäßer Werkzeugsatz, bestehend aus einem Schneidwerkzeug 1 für eine Küchenmaschine und einem Werkzeugadapter 2, an den das Schneidwerkzeug 1 ankuppelbar ist, ist in Figur 1 dargestellt. Dabei ist das Schneidwerkzeug 1 in einer Werkzeugablage 3 abgelegt und von dem Werkzeugadapter 2 getrennt. Das Schneidwerkzeug 1 ist dazu vorgesehen, von einer nicht dargestellten Küchenantriebsmaschine um seine Rotationsachse A in Rotation versetzt zu werden, um mit einem Messer 20 (besser in Fig. 6 zu sehen) des Schneidwerkzeugs 1 Lebensmittel zu zerkleinern. In der Werkzeugablage 3 sind verschiedene meist stegförmige Haltemittel 4 vorgesehen, um eine Rotation des Schneidwerkzeugs 1 in dem Werkzeughalter 3 um seine vorgesehene Rotationsachse A zu verhindern. Um den Werkzeugadapter 2 an dem Schneidwerkzeug 1 anzubringen, befindet sich in Achsennähe des Schneidwerkzeugs 1 eine ringförmige Auskragung 5, auf deren Außenseite vorspringende Gewindeläufe 6 angeordnet sind. Der Werkzeugadapter 2 weist auf seiner Innenseite ein korrespondierendes Innengewinde (nicht dargestellt) auf sowie zwei Sicherungen in Form von Rastwippen 7 auf gegenüberliegenden Seiten des Werkzeugadapters 2. Außerdem ist an dem Werkzeugadapter 2 ein Griffbereich 8 vorgesehen, an dem der Benutzer den Werkzeugadapter 2 handhaben kann.

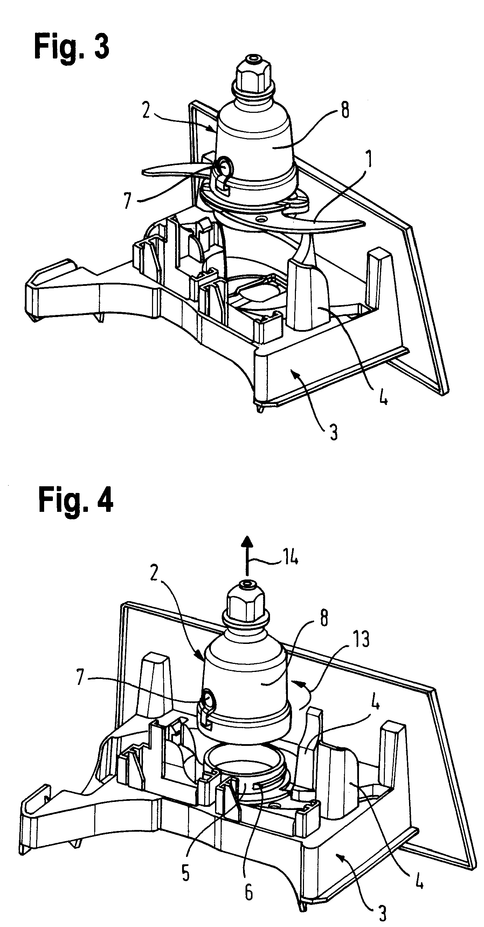

Zum Ankuppeln des Werkzeugadapters 2 an das Schneidwerkzeug 1 wird der Werkzeugadapter 2 wie in Fig. 1 dargestellt vom Benutzer mittels des Griffbereichs 8 in Pfeilrichtung 9 auf das Schneidwerkzeug 1 gesetzt und dann, wie in Fig. 2 gezeigt, in Pfeilrichtung 10 auf das Gewinde 6 des Schneidwerkzeugs 1 geschraubt, während sich letzteres in der Werkzeugablage 3 befindet; die Haltemittel 4 in der Werkzeugablage 3 verhindern ein rotierendes Ausweichen des Schneidwerkzeugs 1. Ein Anfassen des Schneidwerkzeugs 1 ist deshalb nicht erforderlich. Wenn der Werkzeugadapter 2 vollständig auf das Schneidwerkzeug 1 aufgeschraubt ist, verrasten Rastvorsprünge 11 der Rastwippen 7 des Werkzeugadapters 2 mit korrespondierenden Rastkanten 12 des Schneidwerkzeugs 1, sodass ein unbeabsichtigtes Lösen des Werkzeugadapters 2 vom Schneidwerkzeug 1 entgegen der Pfeilrichtung in Fig. 2 verhindert wird. Eine Ansicht der Anordnung der Fig. 4 von oben ist in Fig. 6 dargestellt. Die Kombination aus Werkzeugadapter 2 und Schneidwerkzeug 1 kann nun, wie in Fig. 3 dargestellt, längs der Achse A des Schneidwerkzeugs 1 aus der Werkzeugablage 3 entnommen werden, wobei der Benutzer lediglich den Griffbereich 8 des Adapters handhabt. Die Kombination kann dann auf einen Kupplungsabschnitt einer Antriebswelle der Küchenmaschine gesetzt werden.

Nach der Benutzung kann der Benutzer die Kombination aus Werkzeugadapter 2 und Schneidwerkzeug 1 wieder von der Küchenmaschine abnehmen und in die Werkzeugablage 3 einsetzen. Durch Betätigen der Rastwippe 7 lässt sich Sicherung des Schneidwerkzeugs 1 am Werkzeugadapter lösen und der Werkzeugadapter kann sodann von dem Schneidwerkzeug in der rotierenden Pfeilrichtung 13 der Fig. 4 abgeschraubt werden und der Werkzeugadapter in der translatorischen Pfeilrichtung 14 abgenommen werden. Wiederum verhindern die Haltemittel 4 der Werkzeugablage 3 ein Mitdrehen des Schneidwerkzeugs 1. Der Werkzeugadapter 2 kann nach dem Abnehmen ebenfalls in der Werkzeugablage 3 oder an anderer Stelle verstaut werden.

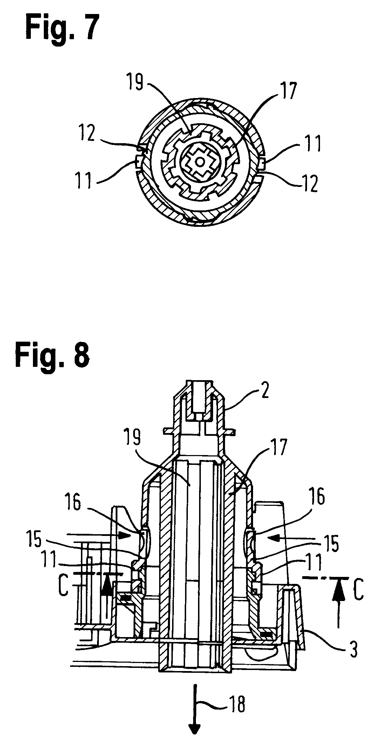

Die Kupplungsmittel 6, 7 zum Kuppeln des Schneidwerkzeugs 1 an den Werkzeughalter 2 sind in der perspektivischen Querschnittsansicht der Fig. 5 und in der Schnittzeichnung der Fig. 8 genauer dargestellt. Insbesondere sind dort die Rastrippen 7 des Werkzeughalters 2 zu erkennen, die auf ihrer gewindeabgewandten Seite jeweils eine Taste 16 aufweisen, die vom Benutzer zur Entsichern betätigt werden kann. Jede Rastwippe 7 ist über einen Steg 15 einstückig mit dem Werkzeugadapter 2 verbunden. Auf der Gewindeseite der Rastwippe 7 befindet sich einer der Rastvorsprünge 11, die bei aufgeschraubtem Schneidwerkzeug 1 durch die Federkraft der Stege 15 in Nischen zwischen zwei Gewindeabschnitten 6 des Schneidwerkzeugs 1 einrastet und das Schneidwerkzeug 1 so gegen ein versehentliches Lösen sichert. Dies ist in Fig. 7 gut zu sehen. Durch Niederdrücken der Tasten 16 in Pfeilrichtung der Fig. 5 lassen sich die Rastvorsprünge 11 aus den Nischen bewegen, sodass der Werkzeugadapter 2 nun in Pfeilrichtung 13 der Fig. 4 vom Werkzeug abgeschraubt werden kann.

In Fig. 7 und Fig. 8 ist auch die hülsenförmige Fassung 17 im Inneren des Werkzeugadapters 2 dargestellt, mit dem dieser an den Kupplungsabschnitt einer Antriebswelle der Küchenmaschine angebracht wird. Dazu wird der Werkzeugadapter 2 samt angekuppeltem Schneidwerkzeug in Richtung des senkrechten Pfeils 18 in Fig. 8 auf den Kupplungsabschnitt aufgesetzt. in der Fassung 17 längs verlaufende Stege 19 sichern den Werkzeugadapter 2 drehfest am Kupplungsabschnitt der Welle.

Durch die Erfindung ist es vorteilhafterweise möglich, den Werkzeugadapter, und damit die Kupplung zum ankuppeln des Werkzeugst an das Küchenantriebsgerät, und das Werkzeug getrennt voneinander aufzubewahren und so Stauraum besser zu nutzen. Insbesondere genügt es, bei mehreren Werkzeugen nur einen Adapter vorzuhalten, was zu erheblichen Platzeinsparungen führen kann.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

## Patentansprüche

1. Werkzeugsatz für eine Küchenantriebsgerät zum Antreiben eines Werkzeugs (1), wobei der Werkzeugsatz umfasst:
mindestens einen Werkzeugadapter (2), der an das Küchenantriebsgerät ankuppelbar ist, um von dem Küchenantriebsgerät angetrieben zu werden, mindestens ein Werkzeug (1), das an den Werkzeugadapter (2) lösbar ankuppelbar ist, um vermittels des Werkzeugadapters (2) von dem Küchenantriebsgerät angetrieben zu werden, und eine Werkzeugablage (3), die das Werkzeug (1) aufnehmen kann, **dadurch gekennzeichnet, dass** in der Werkzeugablage (3) Haltemittel (4) vorgesehen sind, die das Werkzeug (1) in einer vorgesehenen Lage halten können, sodass ein Benutzer den Werkzeugadapter (2), wenn sich das Werkzeug in der Werkzeugablage befindet, an das Werkzeug (1) ankuppeln kann.

2. Werkzeugsatz nach Anspruch 1, **dadurch gekennzeichnet, dass** der Werkzeugadapter (2) einen Griffbereich (8) aufweist.

3. Werkzeugsatz nach einem der vorherigen Ansprüche, **dadurch gekennzeichnet, dass** Kupplungsmittel (6, 7) zum lösbaren Ankuppeln des/der Werkzeugs/e (1) an den Werkzeugadapter (2) auf einer Außenseite des jeweilige Werkzeugs (1) angeordnet sind.

4. Werkzeugsatz nach einem der vorherigen Ansprüche, **dadurch gekennzeichnet, dass** der Werkzeugadapter (2) Sicherungsmittel (7, 11, 16) umfasst, um einem Lösen des Werkzeugs (1) von dem Werkzeugadapter 2 vorzubeugen.

5. Werkzeugsatz nach einem der vorherigen Ansprüche, **dadurch gekennzeichnet, dass** der Werkzeugsatz mehre Werkzeuge (1) umfasst, wobei jedes Werkzeug (1) an den Werkzeugadapter (2) lösbar ankuppelbar ist, um vermittels des Werkzeugadapters (2) von dem Küchenantriebsgerät angetrieben zu werden.

6. Werkzeugsatz nach einem der vorherigen Ansprüche, **dadurch gekennzeichnet, dass** das mindestens ein Werkzeug (1) ein Messer (20) aufweist.

7. Werkzeugsatz nach einem der vorherigen Ansprüche, **dadurch gekennzeichnet, dass** die Kupplungsmittel (6, 7) der Werkzeuge (1) untereinander identisch sind.

8. Küchengerätesatz umfassend einen Werkzeugsatz nach einem der vorherigen Ansprüche und ein Küchenantriebsgerät.

9. Küchengerätesatz nach Anspruch 8, **dadurch gekennzeichnet, dass** er mindestens zwei verschiedene Küchenantriebsgeräte umfasst, an die der Werkzeugadapter ankuppelbar ist, um von dem Küchenantriebsgerät angetrieben zu werden.

## Claims

1. Tool set for a kitchen drive appliance for driving a tool (1), wherein the tool set comprises:
at least one tool adapter (2), which can be coupled onto the kitchen drive appliance in order to be driven by the kitchen drive appliance, at least one tool (1), which can be coupled onto the tool adapter (2) in a releasable manner in order to be driven by the kitchen drive appliance by means of the tool adapter (2), and a tool rack (3) which can receive the tool (1), **characterised in that** retaining means (4) are provided in the tool rack (3), which retaining means (4) can hold the tool (1) in a designated position so that a user can couple the tool adapter (2) to the tool (1), if the tool is located in the tool rack.

2. Tool set according to claim 1, **characterised in that** the tool adapter (2) has a handle section (8).

3. Tool set according to one of the preceding claims, **characterised in that** coupling means (6, 7) for releasable coupling of the tool(s) (1) onto the tool adapter (2) are disposed on an exterior side of the respective tool (1).

4. Tool set according to one of the preceding claims, **characterised in that** the tool adapter (2) comprises securing means (7, 11, 16) in order to prevent the tool (1) from being released from the tool adapter (2).

5. Tool set according to one of the preceding claims, **characterised in that** the tool set comprises a plurality of tools (1), wherein each tool (1) can be coupled onto the tool adapter (2) in a releasable manner in order to be driven by the kitchen drive appliance by means of the tool adapter (2).

6. Tool set according to one of the preceding claims, **characterised in that** the at least one tool (1) has a blade (20).

7. Tool set according to one of the preceding claims, **characterised in that** the coupling means (6, 7) of the tools (1) are identical to one another.

8. Kitchen appliance set comprising a tool set according to one of the preceding claims and a kitchen drive appliance.

9. Kitchen appliance set according to claim 8, **characterised in that** it comprises at least two different kitchen drive appliances, onto which the tool adapter can be coupled in order to be driven by the kitchen drive appliance.

## Revendications

1. Jeu d'outils pour un appareil d'entraînement culinaire pour l'entraînement d'un outil (1), le jeu d'outils comprenant :
au. moins un adaptateur d'outil (2) qui peut être accouplé à l'appareil d'entraînement culinaire pour être entraîné par l'appareil d'entraînement culinaire, au moins un outil (1) qui peut être accouplé de façon amovible à l'adaptateur d'outil (2) pour être entraîné au moyen de l'adaptateur d'outil (2) par l'appareil d'entraînement culinaire, et un magasin à outil (3) qui peut recevoir l'outil (1), **caractérisé en ce que** dans le magasin à outil (3) sont prévus des moyens de maintien (4) qui peuvent maintenir l'outil (1) dans une position prédéfinie, de sorte qu'un utilisateur puisse accoupler l'adaptateur d'outil (2) à l'outil (1) quand l'outil se trouve dans le magasin à outil.

2. Jeu d'outils selon la revendication 1, **caractérisé en ce que** l'adaptateur d'outil (2) comprend une zone de prise (8).

3. Jeu d'outils selon l'une des revendications précédentes, **caractérisé en ce que** des moyens d'accouplement (6, 7) sont disposés sur un côté extérieur de l'outil concerné (1) pour l'accouplement amovible du ou des outils (1) sur l'adaptateur d'outil (2).

4. Jeu d'outils selon l'une des revendications précédentes, **caractérisé en ce que** l'adaptateur d'outil (2) comprend des moyens de sécurité (7, 11, 16) pour empêcher que l'outil (1) ne se désolidarise de l'adaptateur d'outil (2).

5. Jeu d'outils selon l'une des revendications précédentes, **caractérisé en ce que** le jeu d'outils comprend plusieurs outils (1), chaque outil (1) pouvant être accouplé de façon amovible à l'adaptateur d'outil (2) pour être entraîné au moyen de l'adaptateur d'outil (2) par l'appareil d'entraînement culinaire.

6. Jeu d'outils selon l'une des revendications précédentes, **caractérisé en ce qu'**au moins un outil (1) comprend un couteau (20).

7. Jeu d'outils selon l'une des revendications précédentes, **caractérisé en ce que** les moyens d'accouplement (6, 7) des outils (1) sont identiques entre eux.

8. Jeu d'appareils culinaires comprenant un jeu d'outils selon l'une des revendications précédentes et un appareil d'entraînement culinaire.

9. Jeu d'appareils culinaires selon la revendication 8, **caractérisé en ce qu'**il comprend au moins deux appareils d'entraînement culinaires différents auxquels l'adaptateur d'outil peut être accouplé, pour être entraîné par l'appareil d'entraînement culinaire.
